# EUROPEAN PATENT APPLICATION

(11) **EP 1 535 689 A2**
(43) Date of publication of application: **01.06.2005**
(21) Application number: 04105692.0
(22) Date of filing: 11.11.2004
(51) Int. Cl.: B23K 1/00

(54) **Method for fluxless soldering of workpieces**

(30) Priority: 26.11.2003 EP 03104378
(71) Applicant: International Business Machines Corporation, Armonk, N.Y. 10504 (US)
(72) Inventor: Eberhard, Ralf, 55131 Mainz (DE); Laue, Christian, Dr., 55131 Mainz (DE)
(74) Representative: Klein, Hans-Jörg

(57) **Abstract**

A method of fluxless bonding first and second members to each other by temperature controlled laser soldering is provided, whereby the first and second members carrying solder pads are arranged in a mounting device. Mechanical vibration is applied to the mounting device carrying the members during heating by laser irradiation and mechanical vibration is switched off before the cooling-off phase of the soldered joints.

## Description

### Field of the Invention

The present invention relates in general to a method for fluxless soldering of workpieces. Specifically, the present invention is concerned with such a method using temperature controlled laser soldering.

### Background of the Invention

Soldered joints are normally manufactured using flux. The flux reduces the oxide layer present on the solder and decreases the surface tension of the solder. Thus, the wetting of the surfaces to be connected by the solder is enhanced.

During soldering, solder and flux are strongly heated, e.g., up to about 180-200°C, where the solder melts. At the same time the flux is evaporated and will deposit on the workpiece, thereby contaminating it. Therefore, workpieces that are to be used in a highly clean atmosphere will have to be cleaned from flux residues by costly and elaborate processes.

An example for such workpieces are the actuators in hard disk drives (HDD). Any kind of contamination which may detach from the workpiece during use, e.g., flux residues, may lead to failure of the disk drive.

A further disadvantage of flux is its corrosion-promoting effect.

Therefore, processes are desirable that allow for fluxless soldering of electronic workpieces. This reduces the number of process steps and eliminates a source of contamination.

In case no flux is used, the oxide layer present on the solder that hampers the wetting of the surface to be connected, will have to be overcome by other means.

Methods are known which use temperatures that are noticeably higher than the melting point of the solder (> about 300°C) for fluxless soldering. These methods typically use lasers for temporarily heating the solder joint. The soldering is thereby controlled by temperature measurement.

DE 198 50 595 C2 discloses a method of laser soldering of semiconductor chips, wherein a substrate having metallic contact pads is provided, the chip is arranged on these contact pads with its solder joints and all solder joints are soldered to the contact pads at the same time by directing a laser beam on the backside of the chip until the solder applied to the solder joints is melting. Subsequently, the laser irradiation is stopped. A contactless, temperature sensitive sensor is provided which is directed to the backside of the chip and which measures the temperature-time-gradient on the backside of the chip. A respective signal is sent to a control equipment which discontinues the irradiation.

In EP-B-0 406 351 there is disclosed an apparatus for fluxless soldering first and second members to each other, whereby the bonding is accomplished by the provision of a bonding tool having a pressure tip and a tool bore. The bonding tool is used for applying a pressure pressing said members against each other at an area thereof to be bonded. Further, vibrating means are provided which are connected with said bonding tool for vibrating the tool at an ultrasonic frequency. For applying heat to one of said members at the area, laser means are provided.

The above mentioned methods cannot be used if only the solder pads and not the complete member must be heated to prevent damage of sensitive substrates underlying the solder pads. Furthermore, they cannot be used if direct mechanical access to the solder pads is not possible or if the solder pads must not be contacted mechanically.

### Summary of the Invention

It is therefore an object of the present invention to provide a method for fluxless soldering of workpieces using laser soldering that overcomes the above mentioned disadvantages of the prior art.

This and other objects and advantages are achieved by the method disclosed in claim 1 and the apparatus disclosed in claim 8.

Advantageous embodiments of the invention are disclosed in the dependent claims.

### Brief Description of the Drawings

The invention will in the following be described in more detail in conjunction with the drawings, in which
Fig. 1 schematically depicts an embodiment of the arrangement used with the inventive method; and
Fig. 2 schematically shows the temperature-time-characteristics and the vibration-time-characteristics for the inventive method.

### Detailed Description of the Preferred Embodiment

In addition to the known methods for laser soldering of workpieces, the inventive method uses mechanical vibration which assists in tearing open the oxide layer und the flowing of the liquid solder. In order to avoid cold solder joints, the vibration is stopped by a trigger signal before the solder joint starts to cool down. The workpieces to be connected may be electronic substrates, like, e.g., semiconductor chips or the like.

The vibrator that is additionally used will put the liquefied solder pads into vibration and will thus assist the confluence of the solder and the tearing open of the oxide layer. The trigger signal will start vibration at the beginning of the soldering operation and will stop vibration before the solder joint will cool down. In this way, cold solder joints are avoided by stopping vibration in time.

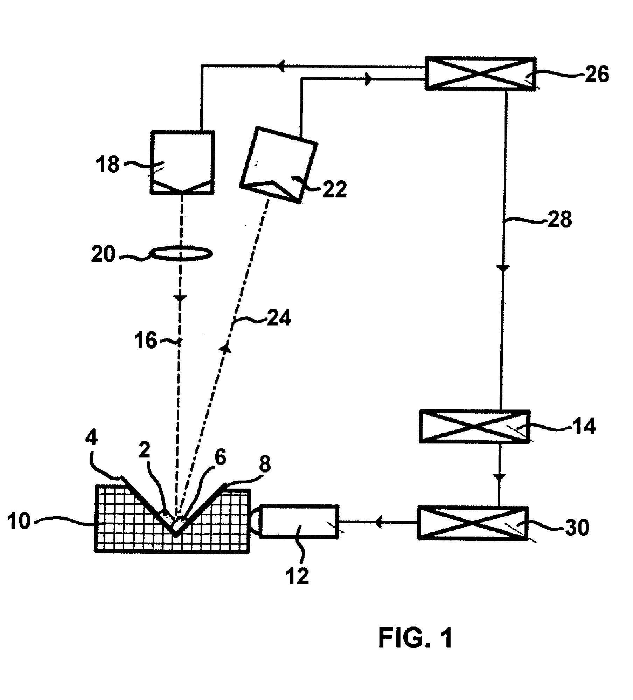

Fig. 1 shows a first solder pad 2 located on a first substrate 4. This solder pad is brought into contact with a second solder pad 6 being located on a second substrate 8. The solder pads 2, 6 are present on the substrates 4, 8 in the form of solder depots. The first and second substrates 4, 8 could either be made of the same material or can be made of different materials.

For the soldering operation this arrangement is secured in a mounting device 10 by means of some clamping mechanism to press the two solder depots against each other. This mounting device is made of temperature resistant material, e.g., aluminium, brass, CrNi-steel, ceramics and the like, and is typically formed to comply with the angle in which the two substrates 4, 8 are held against each other for soldering. The mounting device 10 and, in turn, the substrates 4, 8 on which the solder pads are arranged are then put into vibration by means of a vibrator 12. The vibrator is formed such that the vibration is transferred to the solder pads in an optimal way. Thus, the vibrator 12 may have a spherical surface as shown in Fig. 1. However, the vibrator may also be provided in the form of a small motor having an unbalance as it is used in mobile phones for vibration alarm. The vibrator 12 may as well be fixedly connected to the mounting device 10.

In a preferred embodiment, a piezo actuator was used as the vibrator 12. The frequency used was in the area of between about 50 to about 100 Hz, and the vibration amplitude was about 10 µm. Using a piezo actuator has the advantage that it is able to provide very high forces, does not produce any magnetic fields and is, at the same time, a relative small component showing quick response times. By means of a waveform generator 14, a respective signal, e.g., a sawtooth signal is applied to the actuator. However, as will be clear for the skilled worker, other signal forms can also be applied. Furthermore, it is clear that the vibration amplitude and the frequency used depends on the respective substrates.

After the substrates carrying the solder pads have been arranged in the mounting device and the vibrator has been attached to the mounting device, the irradiation 16 of a laser system 18 is focused to the solder pads via optics 20. It has to be mentioned that the vibration has not necessarily to start at the same time as the laser irradiation. It may start some time before or after laser irradiation is started, however, it has to be activated during the liquid phase of the solder.

A temperature sensor 22 detects the temperature irradiation 24 emanating from the solder pads.

In the preferred embodiment, a diode laser system having a wavelength of 808 nm and an irradiation power of 20 W was used.

The diameter of focus on the solder pads was about 350 µm. A pyrometer sensor was used for temperature measurement. It is, however, clear to the skilled worker, that other laser systems having different parameters can be used. In general, the laser wavelength has to be chosen so that it is absorbed preferably in the solder material and damage to the underlying substrate material is prevented.

During the soldering procedure a control unit 26 reads the temperature signal of the temperature sensor 22 and controls the output power of the laser system 18. The waveform generator 14 is switched on and off by the control unit 26 by means of a trigger signal 28. The control unit 26 generates the voltage signal for the vibrator 12 by means of an amplifier 30.

The whole soldering process, i.e., warm-up, soldering and cooling down, is in the range of about 0.5 to 1 second.

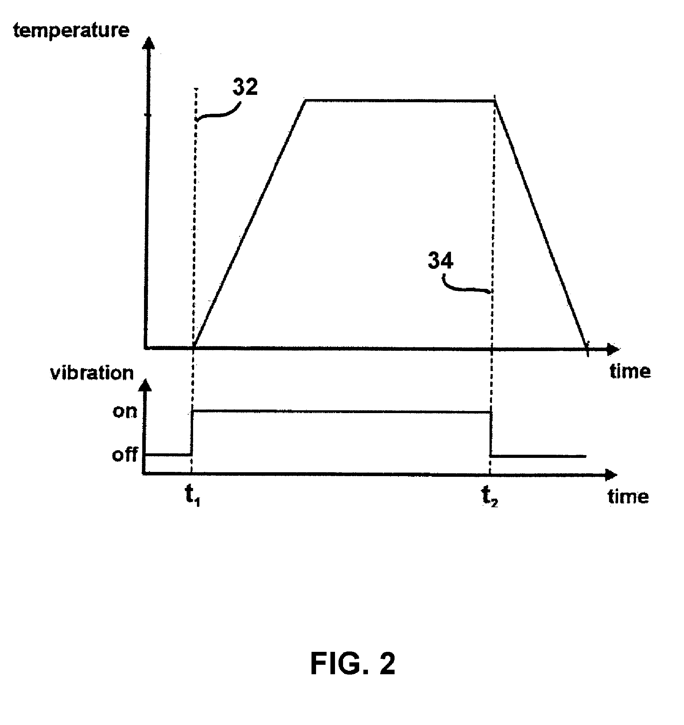

Fig. 2 schematically shows a typical target temperature-characteristics with the respective trigger times. At the beginning of the soldering procedure (t₁), the control unit 26 sends a start-trigger-signal 32 to the waveform generator 14. The control unit 26 then compares the actual temperature value to a predetermined target temperature characteristics. At a predetermined point in time (t₂), which lies before the cooling down phase of the soldering procedure, the control unit 26 sends a stop-trigger-signal 34 to the waveform generator 14. Consequently, the vibrator is switched off. The laser irradiation may be stopped at this time as well. However, in case a definite cooling characteristic is desired, it is possible that the laser goes on irradiating whereby its power decreases gradually.

It has to be mentioned that temperature, times, frequency and amplitude depend on the solder used, as well as on the substrate material and the volumes of the materials. In this respect, the characteristics shown in Fig. 2 is only one example that is not restrictive to the present invention.

The vibration frequency may be controlled such that maximum energy is coupled into the solder joint (resonance).

The method of the present invention has the decisive advantage that the oxide layer present on the solder can be teared open more easily and thus workpieces can be soldered together without having to use any flux and the disadvantages connected therewith. By using mechanical vibration in addition to temperature controlled laser soldering, the flowing of liquefied solder is enhanced. Thus, an improved distribution of the solder is achieved.

## Claims

1. Method of fluxless bonding first and second members (4, 8) to each other by temperature controlled laser soldering, whereby said first and second members (4, 8) carrying solder pads (2, 6) are arranged in a mounting device (10), wherein mechanical vibration is applied to said mounting device (10) carrying said members (4, 8) during heating by laser irradiation and wherein said mechanical vibration is switched off before the cooling-off phase of the soldered joints.

2. Method according to claim 1, wherein said first and second members (4, 8) are electronic substrates.

3. Method according to claim 1 or 2, wherein said mechanical vibration is applied by means of a piezo actuator.

4. Method according to claim 3, wherein said piezo actuator has a spherical surface.

5. Method according to claim 3 or 4, wherein said piezo actuator is operated at a frequency of between 50 and 100 Hz and wherein the vibration amplitude is in the area of about 10 µm.

6. Method according to any one of the preceding claims, wherein said mechanical vibration is started at the beginning of the soldering process by means of a first trigger signal (32) sent by a control unit (26) and is stopped by means of a second trigger signal (34) sent by said control unit (26).

7. Method according to any one of the preceding claims, wherein the frequency of the mechanical vibration is adapted such that the maximum energy is coupled into said solder joint.

8. Apparatus for fluxless bonding first and second members (4, 8) to each other by temperature controlled laser soldering, said apparatus being provided with a device (12) for applying mechanical vibration to said members during heating by laser irradiation.

9. Apparatus according to claim 8, wherein said device is a piezo actuator.

10. Apparatus according to claim 9, wherein said piezo actuator has a spherical surface.
